Europäisches Patentamt

European Patent Office

Office européen des brevets

(11) Publication number: **0 225 644 B1**

## EUROPEAN PATENT SPECIFICATION

(45) Date of publication of patent specification: **18.03.92** (51) Int. Cl.5: **H02M 3/158**

(21) Application number: **86117214.6**

(22) Date of filing: **10.12.86**

(54) **Power supply switch circuit for use in a transceiver or the like.**

(30) Priority: **11.12.85 JP 278546/85**

(43) Date of publication of application:
**16.06.87 Bulletin 87/25**

(45) Publication of the grant of the patent:
**18.03.92 Bulletin 92/12**

(84) Designated Contracting States:
**DE FR GB NL SE**

(56) References cited:
**WO-A-82/04349**
**US-A- 3 820 004**

**PATENT ABSTRACTS OF JAPAN, vol. 8, no.
36 (E-227)[1473], 16th February 1984; & JP-
A-58 192 464 (HITACHI SEISAKUSHO K.K.)
09-11-1983**

(73) Proprietor: **NEC CORPORATION**
**7-1, Shiba 5-chome Minato-ku**
**Tokyo 108-01(JP)**

(72) Inventor: **Ikeda, Shigeki C/o NEC Corporation**
**33-1, Shiba 5-chome Minato-ku**
**Tokyo(JP)**
Inventor: **Fukumura, Yuko C/o NEC Corpora-
tion**
**33-1, Shiba 5-chome Minato-ku**
**Tokyo(JP)**

(74) Representative: **Vossius & Partner**
**Siebertstrasse 4 P.O. Box 86 07 67**
**W-8000 München 86(DE)**

EP 0 225 644 B1

## Description

### BACKGROUND OF THE INVENTION

The present invention relates to a power switch circuit and, more particularly, to a switch circuit for on-off controlling a power supply to a load, such as a transmitting/receiving portion of a radio transmitter/receiver to be referred to as a transceiver hereinafter.

The Japanese patent JP-A-58 192464 discloses a booster or switching regulator including a series-connected MIS FETs. These MIS FETs are, however, used as a switching transistor of the switching regulator but not as a switching circuit switching on and off power supply to load like the present invention. More definitely, the MIS FETs are provided by turning on to charge a capacitor with an input voltage from a node.

A typical example of a conventional power switch circuit of the first mentioned type is disclosed in US-A-4,420,700. The switch circuit disclosed in this patent includes an N channel enhancement metal-oxide semiconductor field effect transistor (MOS FET) arranged between a power supply and a load, such as a transmitting/receiving portion etc. of a transceiver. Since a gate drive current of a MOS FET is as small as 1 microampere or less and a tolerable current therethrough can be made relatively large without increasing a size thereof, in general, the disclosed switch circuit is compact and a current consumption thereof is small enough.

However, since there is a parasitic diode formed between the drain and the source of the MOS FET, there may be a current flowing through the parasitic diode regardless of the on-off operation of the circuit when terminals of the power source are inadvertently connected to the circuit inversely. Therefore, the power source becomes always connected to the load such as the transmitting/receiving portion, causing the load to be broken down or a performance thereof to be degraded.

The WO 82/04349 relates to a power switch circuit of the same type as discussed above. The power switch circuit includes a single MOS FET between a power source and a load. Therefore, it also comprises the above mentioned disadvantages.

### SUMMARY OF THE INVENTION

Therefore, an object of the present invention is to provide a power switch circuit which is compact in size and has a minimized current consumption and which the breakdown of a load and/or degradation of performance thereof is prevented from occurring even when the power source is connected to the transceiver with terminals being reversed.

According to the present invention, there is provided a power switch circuit comprising: a power source for providing a direct current (DC) voltage; a voltage booster circuit for boosting the DC voltage; a switch connected between the power source and the voltage booster circuit for on-off controlling the latter; a first enhancement mode MOS FET having the drain or source connected to the power source and the gate connected to the output of the voltage booster circuit; a second enhancement mode MOS FET having the source or drain connected to the source or drain of the first enhancement MOS FET and the gate connected to the output of the voltage booster circuit; and means for connecting the source or drain of the second enhancement mode MOS FET to a load.

### BRIEF DESCRIPTION OF THE DRAWINGS

The above and other objects, features and advantages of the present invention will become more apparent from the following description of preferred embodiments of the present invention with reference to the accompanying drawings, in which

Fig. 1 is a block diagram showing a conventional power switch circuit;

Fig. 2 is a block diagram showing an embodiment of a power switch circuit according to the present invention;

Fig. 3 is a circuit diagram showing the circuit in Fig. 2 in more detail; and

Fig. 4 is a block diagram showing another embodiment of the present invention.

### DESCRIPTION OF THE PREFERRED EMBODIMENTS

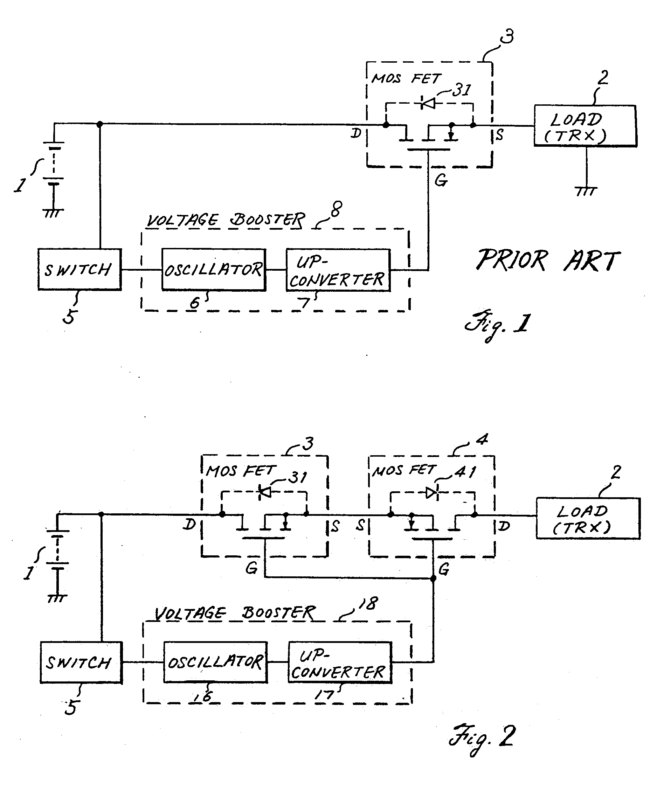

For a better understanding of the present invention, a conventional power switch circuit will be described firstly with reference to Fig. 1. The power switch circuit shown in Fig. 1 is substantially the same as that disclosed in the aforementioned U. S. Patent to Fay et al.

In Fig. 1, a power source or battery 1 connected through a switch composed of an N channel enhancement mode MOS FET 3 to a transmitting/receiving portion 2 acting as a load. The power source 1 is intended to supply a direct current (DC) to the load 2. The drain D, the source S and the gate G of the MOS FET 3 are connected to the positive terminal of the power source 1, the transmitting/receiving portion 2 and a booster circuit 8, respectively. The booster circuit 8 is composed of an oscillator 6 and a multistage voltage doubling and rectifying circuit 7 and adapted to boost a source voltage supplied through a power switch 5 from the power source 1 and to supply a resulting high voltage to the gate G of the MOS FET 3. When the power switch 5 is turned on, the source voltage of the power source 1 is boosted by the booster circuit 8 and applied to the gate G of the MOS FET 3 to turn the latter on. Upon turning conductive of the MOS FET 3, the voltage of power source 1 is applied to the transmitting/receiving portion 2. The transmitting/receiving portion 2 requires a current of 2 to 3 amperes for an output power of 5 watts when applied to a mobile station of a mobile telecommunication system having a frequency band of 800 MHz, for example. A tolerable current of the MOS FET covers this current value sufficiently.

There is a parasitic diode 31 formed between the drain D and the source S of the MOS FET 3, through which a current tends to flow from the source side to the drain side regardless of the on-off operation of the power switch 5 when the connections of the positive and negative terminals of the power source 1 to the FET are reversed erroneously, as mentioned previously. Such current flow in the reverse direction may damage the transmitting/receiving portion 2 or degrade the performance thereof.

In Fig. 2 which shows an embodiment of the present invention, a MOS FET 4 is added in series with the MOS FET 3, which is of the same type as that of the MOS FET 3 and connected between the latter and the transmitting/receiving portion 2 with a source S and a drain D being reversed with respect to those of the MOS FET 3. That is, the source S and the drain D of the MOS FET 4 are connected to the source S of the MOS FET 3 and the transmitting/receiving portion 2, respectively. A gate G of the MOS FET 4 is connected to the gate of the MOS FET 3 and supplied with the same output voltage of a booster circuit 18.

In general, a MOS FET having the source S and the drain D connected so as to allow a current to flow from the source S to the drain D can be on-off controlled according to a gate voltage thereof. Therefore, even with the MOS FETs 3 and 4 connected as shown, a power can be supplied from the power source 1 to the transmitting/receiving portion 2 when the switch 5 is turned on. A gate voltage required to turn-on the MOS FET is about 30 volts when the power source voltage is 13.8 volts.

The MOS FET 4 has a parasitic diode 41 formed between the source S and the drain D thereof. In Fig. 2, the parasitic diodes 31 and 41 are connected in opposite polarity. Therefore, there is no current allowed to flow between the power source 1 and the transmitting/receiving portion 2 when the positive and negative terminals of the power source 1 are connected to the circuit erroneously in polarity. Consequently, it is possible to prevent the damage or degradation of performance of the transmitting/receiving portion 2 due to the reversed connection of the power source thereto.

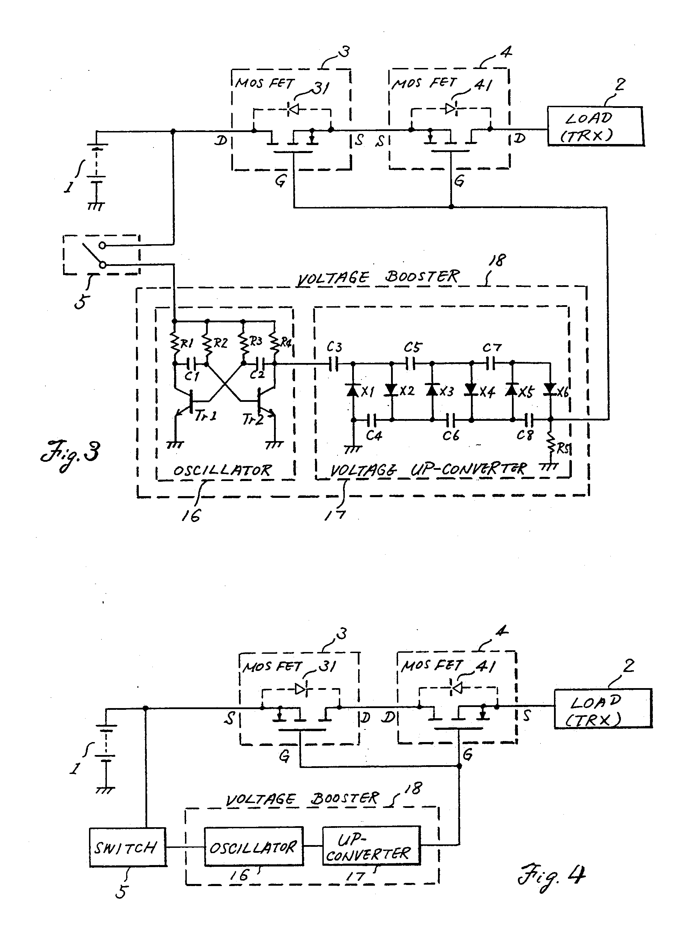

Fig. 3 shows the booster circuit 18 of the embodiment shown in Fig. 2, in detail. In Fig. 3, the booster circuit 18 comprises an oscillator 16 and a voltage up-converter 17. The oscillator 16 comprises an astable multivibrator composed of a pair of transistors Tr1 and Tr2. When the switch 5 is turned on, either the transistor Tr1 or Tr2 is turned on in an initial stage since the oscillator 16 is astable. Assuming that the transistor Tr2 is turned on. The emitter and collector voltages of transistor Tr2 and the emitter and base voltages of transistor Tr1 have the same voltage and thus the transistor Tr1 is in the off state. As long as the on-state of transistor Tr2 continues, a capacitor C2 is charged gradually in the positive direction through a resistor R3. When the terminal voltage of capacitor C2 reaches 0.7 volts, the transistor Tr1 is turned on and the transistor Tr2 is turned off in the same way as the transistor Tr1. With the repetition of this operation, the collector voltage of transistor Tr2, i.e., the output of oscillator 16 becomes a rectangular signal having peak values zero and V volts, where V is the voltage of power source 1.

A voltage up-converter 17 comprises a multistage voltage doubling and smoothing circuit in the form of the so-called Cockcroft-Walton circuit. In a half cycle of the output voltage of the oscillator 16, a current flows through a diode X1 and a capacitor C3 and charges the latter with the peak voltage V volts of the oscillation voltage. In a subsequent half cycle, a current flows through the capacitor C3, a diode X2 and a capacitor C4. Therefore, the latter capacitor is charged with a voltage which is a charge voltage, V volts, of the capacitor C3 added by the oscillation voltage, zero volt, providing a terminal voltage of V volts. Then, in a next half cycle, a current flows through a capacitor C4, a diode X3, a capacitor C5 and the capacitor C3 to charge the capacitor C5 with a voltage which is the charge voltage, V volts, of the capacitor C4 added by the oscillation voltage, V volts, resulting in a terminal voltage of 2V volts. In this manner, a terminal voltage of a capacitor C8 in the last stage becomes 3V volts.

Fig. 4 shows another embodiment of the present invention. The composition of Fig. 4 differs from that of Fig. 2 in that the connection of the MOS FETs 3 and 4 is reversed. That is, the drains of the MOS FETs 3 and 4 are connected together. Also in this case, there is no current to flow between the power source 1 and the transmitting/receiving portion 2 through the parasitic diodes when the power source is connected with polarity being reversed erroneously.

As described hereinbefore, the power switch circuit according to the present invention includes a pair of enhancement mode MOS FETs arranged between the power source and the load with the sources or the drains thereof being connected together. Due to the employment of the enhancement mode MOS FETs, the power switch circuit can be compact in size and the power consumption thereof is minimized. Further, even if the power source is connected erroneously to the load with reversed polarity, there is no damage of the load or no degradation of performance thereof.

## Claims

1. A power switch circuit for on/off-switching the power supply from a power source (1) to a load (2) comprising:
   means (18) for supplying a gate voltage;
   a switch (51) connected between said power source (1) and
   said means (18) for on-off controlling said means (18);
   a first enhancement mode MOS FET (3) having the drain source connected to said power source (1) and the gate connected to the output of said means (18) and
   means for connecting said power source (1) to the load (2); characterized by a second enhancement mode MOS FET (4) connected in series and opposite polarity with respect to said first enhancement mode MOS FET (3) having the gate connected to said output of said means (18).

2. A power switch as claimed in claim 1, wherein the power source (1) provides a DC voltage.

3. A power switch circuit as claimed in claim 1 or 2, wherein said means (18) for supplying the gate voltage comprises a voltage booster means (18) connected through said switch (5) to said power source (1) for boosting a voltage of said power source (1) to produce said gate voltage.

4. A power switch circuit as claimed in claim 3, wherein said voltage booster circuit (18) comprises an oscillator (16) operable in response to said voltage and a voltage up-converter (17) adapted to step up the output voltage of said oscillator (16) and to supply the resultant voltage to said gates of said first (3) and second (4) enhancement mode MOS FETs.

5. A power switch circuit as claimed in any of claims 1 to 4, wherein said load (2) comprises a transmitting/receiving portion of a transceiver.

## Revendications

1. Circuit interrupteur d'alimentation pour appliquer ou ne pas appliquer l'alimentation depuis une source d'alimentation (1) à une charge (2) comprenant :
   un moyen (18) pour délivrer une tension de grille ;
   un interrupteur (51) connecté entre la source d'alimentation (1) et le moyen (18) pour commander l'application ou la non application au moyen (18) ;
   un premier transistor métal-oxyde à effet de champ en mode enrichissement (3) ayant le drain ou la source relié à la source d'alimentation (1) et la grille reliée à la sortie du moyen (18) et un moyen pour connecter la source d'alimentation (1) à la charge (2) ; caractérisé par un second transistor métal-oxyde à effet de champ en mode enrichissement (4) relié en série et de polarité opposée par rapport au premier transistor métal-oxyde à effet de champ en mode enrichissement (3) avant la grille reliée à la sortie du moyen (18).

2. Interrupteur d'alimentation selon la revendication 1, dans lequel la source d'alimentation (1) délivre une tension continue.

3. Circuit interrupteur d'alimentation selon la revendication 1 ou 2, dans lequel le moyen (18) pour délivrer la tension de grille comprend un moyen suramplificateur de tension (18) connecté à travers l'interrupteur (5) à la source d'alimentation (1) pour suramplifier une tension de la source d'alimentation (1) afin de produire la tension de grille.

4. Circuit interrupteur d'alimentation selon la revendication 3, dans lequel le circuit suramplificateur de tension (18) comprend un oscillateur (16) qui peut être mis en oeuvre en réponse à la tension et un convertisseur élévateur de tension (17) prévu pour élever la tension de sortie de l'oscillateur (16) et délivrer la tension résultante aux grilles des premier (3) et second (4) transistors résultante aux grilles des premier (3) et second (4) transistors métal-oxydes à effet de champ en mode enrichissement.

5. Circuit interrupteur d'alimentation selon l'une quelconque des revendications 1 à 4, dans lequel la charge (2) comprend une partie d'émission/réception d'un émetteur/récepteur.

**Patentansprüche**

1. Leistungsversorgungsschalterschaltung zum Ein/Ausschalten der Stromzufuhr von einer Stromquelle (1) zu einer Last (2) mit:

   einer Einrichtung (18), um eine Gate-Spannung zur Verfügung zu stellen;

   einem Schalter (51), der zwischen der Stromquelle (1) und der Einrichtung (18) angeschlossen ist, zum Ein/Aus-Steuern der Einrichtung (18);

   einem ersten MOS-FET (3) vom Anreicherungstyp, dessen Drain oder Source mit der Stromquelle (1) und dessen Gate mit dem Ausgang der Einrichtung (18) verbunden ist, und

   einer Einrichtung, um die Stromquelle (1) mit der Last (2) zu verbinden, **gekennzeichnet durch** einen zweiten MOS FET (4) vom Anreicherungstyp, der in Reihe und mit entgegengesetzter Polarität bezüglich des ersten MOS FET (3) vom Anreicherungstyp geschaltet ist und dessen Gate mit dem Ausgang der Einrichtung (18) verbunden ist.

2. Leistungsschalter nach Anspruch 1, wobei die Stromquelle (1) eine Gleichspannung zur Verfügung stellt.

3. Leistungsversorgungsschalterschaltung nach Anspruch 1 oder 2, wobei die Einrichtung (18) zum Liefern der Gate-Spannung eine Spannungsverstärkereinrichtung (18) aufweist, die über den Schalter (5) mit der Stromquelle (1) verbunden ist, um eine Spannung der Stromquelle (1) zu verstärken und die Gate-Spannung zu erzeugen.

4. Leistungsversorgungsschalterschaltung nach Anspruch 3, wobei der Spannungsverstärkerschaltkreis (18) aufweist:
   einen Oszillator (16), der als Reaktion auf die Spannung arbeitet, und einen Spannungsaufwärtswandler (17), um die Ausgangsspannung des Oszillators (16) schrittweise zu erhöhen und die sich ergebende Spannung zu den Gates der ersten (3) und zweiten (4) MOS FETs vom Anreicherungstyp zu liefern.

5. Leistungsversorgungsschalterschaltung nach einem der Ansprüche 1 bis 4, wobei die Last (2) ein Sende/Empfangsteil eines Sende-Empfängers ist.

PRIOR ART

Fig. 1

Fig. 2

Fig.3

Fig.4